# EUROPEAN PATENT APPLICATION

(11) **EP 2 061 282 A2**
(43) Date of publication of application: **20.05.2009**
(21) Application number: 08253701.0
(22) Date of filing: 12.11.2008
(51) Int. Cl.: H04W 24/00

(54) **System and method for testing mobile telephone devices using a plurality of communication protocols**

(30) Priority: 13.11.2007 US 939873
(71) Applicant: Metrico Wireless, Inc., Frederick, MD 21704 (US)
(72) Inventor: Topaltzas, Dimitrios M., Ellicott City Maryland 21042 (US); Lloyd, Rupert C., Reston Virginia 20191 (US)
(74) Representative: Tunstall, Christopher Stephen

(57) **Abstract**

A system and method for testing a mobile telephone devices configured to communicate over a mobile telephone network is provided. In one embodiment, the method includes receiving a user selection of one of a plurality of communication tests, wherein each test comprises one or more tasks and each task is configured to communicate test payload via at least one of a plurality of different communication protocols. The method further includes communicating one or more tests payloads over the mobile telephone network with the mobile telephone device according to the one or more tasks of the selected test, and determining the results of the test. The results may include one or more of throughput, connectivity, error rate, loss of connectivity, latency, jitter, and others. The results may be stored on a computer along with data identifying the mobile telephone device and the location of the handset during the test. Example protocols include FTP, UDP, HTTP, Ping, and others.

## Description

### Field of the Invention

The present invention generally relates to systems and methods for evaluating communication devices, and more particularly to systems and methods for evaluating the performance of mobile telephone devices in the delivery of various services through a mobile telephone network.

### Background of the Invention

Mobile telephone devices have become ubiquitous in our society. Unlike conventional landline telephony services, which typically operate in a home or office and are delivered via a wire or cable and enjoy a highly consistent transmission quality, mobile telephone devices are subjected to use under varying radio environments which results in highly varying transmission quality and thus highly varying speech and data service performance to the end user. One challenge to those designing mobile telephone devices is to design the telephone devices to provide the desired speech and data quality even when the user is using the telephone device in challenging and changing radio environments. Further, wireless network operators also want users of their network to use telephone devices that provide adequate communication quality in all radio environments to ensure that the user has a satisfactory experience using the wireless network. Thus, there are numerous parties who desire to test the quality of communications provided by a mobile telephone device.

There are, however, a wide variety of telephone devices used for communicating over wireless mobile telephone networks. With the proliferation of mobile telephone devices, many designs of telephones have evolved. The different designs of telephone devices result in different performance characteristics for each telephone device. Various design characteristics may impact the quality of the speech and data services provided by a telephone device and its ability to provide communications in varying radio environments. For example, the radio front-end of a telephone device, which drives, in part, the radiated performance (a devices ability to receive and transmit radio signals) of the device may positively or negatively impact the quality of communications in various radio environments. Another factor may be the device's capability to cancel interfering radio signals from wanted radio signals in order to reduce the signal-to-noise ratio and thereby improve the quality of communications. Other design factors include (a) the performance of the device's digital signal processor, (b) the design of the device's operating system and associated applications including the handling of TCP/IP communication. As a result, the many different mobile telephone devices have varying performance characteristics due to their design. Thus, different telephone devices operating in the same radio environment provide different qualities of communication.

As the mobile telephone networks have developed, various digital communication services have been introduced, including data communications and digital voice communications. Along with the conventional voice services provided in the past, mobile telephone devices are being used to access the internet, communicate text messages, video files, audio files, email and other data. A challenge to mobile telephone device manufacturers, and to wireless carriers, is how to evaluate the relative performance of mobile telephone devices for the various voice and data services.

Another challenge is to objectively compare the communication quality of different mobile telephone devices in a consistent manner. The present invention provides methods and systems to objectively test the various communication qualities of different mobile telephone devices in varying environments. These and other advantageous may be provided by one or more embodiments of the present invention.

### Summary of the Invention

The present invention provides a system and method for testing mobile telephone devices configured to communicate over a mobile telephone network. In one embodiment, the method includes receiving, via the mobile telephone network, a user selection of one of a plurality of communication tests, wherein each test comprises one or more tasks and each task is configured to communicate one or more test payloads via at least one of a plurality of different communication protocols including but not limited to FTP, UDP, HTTP, SMTP, and Ping. The method further includes communicating one or more test payloads over the mobile telephone network to the mobile telephone device according to the one or more tasks of the selected test, and determining the results of the test. The results may include one or more of throughput, connectivity, error rate, loss of connectivity, latency, jitter, and others. The results may be stored on the mobile devices and transmitted to a computer that receives results via the mobile telephone network from many (and all) devices tested along with data identifying the mobile telephone device and the location of the handset during the test. The invention also may be embodied as test applications stored on a plurality of mobile telephone devices and one or more servers for implementing such processes.

The invention will be better understood by reference to the following detailed description taken in conjunction with the accompanying drawings.

### Brief Description of the Drawings

The invention is further described in the detailed description that follows, by reference to the noted drawings by way of non-limiting illustrative embodiments of the invention, in which like reference numerals represent similar parts throughout the drawings. As should be understood, however, the invention is not limited to the precise arrangements and instrumentalities shown. In the drawings:

Figure 1 is a block diagram of an example system for testing data and voice services provided by a mobile telephone device according to an example embodiment of the present invention;

Figure 2 illustrates an example test, according to an example embodiment of the present invention;

Figure 3 illustrates an example method for testing data and voice services provided by a mobile telephone device communicating through a mobile telephone network, according to an example embodiment of the present invention; and

Figure 4 illustrates another example method for testing data and voice services provided by a mobile telephone device communicating through a mobile telephone network, according to an example embodiment of the present invention.

### Detailed Description of Illustrative Embodiments

In the following description, for purposes of explanation and not limitation, specific details are set forth, such as particular networks, communication systems, computers, terminals, devices, components, techniques, telephone devices, mobile telephones, accessory devices, simulators, ear pieces, headsets, telephone handsets, data and network protocols, software products and systems, operating systems, development interfaces, hardware, etc. in order to provide a thorough understanding of the present invention.

However, it will be apparent to one skilled in the art that the present invention may be practiced in other embodiments that depart from these specific details. Detailed descriptions of well-known networks, communication systems, computers, telephone devices, mobile telephones, accessory devices, simulators, ear pieces, headsets, telephone handsets, terminals, devices, components, techniques, data and network protocols, software products and systems, development interfaces, operating systems, and hardware are omitted so as not to obscure the description of the present invention.

According to an embodiment of the present invention, the performance of a mobile telephone device, such as a mobile telephone, is evaluated for the delivery of various services. As used herein, "mobile telephone" means a telephone configured to communicate voice and data over a mobile telephone network. Other telephone devices include mobile telephone accessories (e.g., a wired or wireless) such as an earpiece, headset, speaker phone (e.g., that includes a microphone and which may be, for example, in an automobile, or other device), or other such device. A mobile telephone, also sometimes commonly referred to as a cell telephone, is a long-range, mobile electronic device used for mobile communications. In addition to providing the standard voice function of a telephone, many mobile telephones may support additional services such as SMS for text messaging, email, FTP, UDP, packet switching for access to the Internet, and MMS (Multimedia Messaging Service) for sending and receiving photos and video. A conventional mobile telephone may wirelessly communicate via a cellular network of base stations (cell sites), which is connected to the public switched telephone network (PSTN). A mobile telephone device, thus may include a mobile telephone alone, or in combination with an accessory.

The present invention may be used to evaluate data communications using various protocols, such as the hypertext transfer protocol (http), file transfer protocol (FTP), or user datagram protocol (UDP). Various communication qualities may be test include throughput (e.g., peak, average, etc.), error rate, and connectivity. In addition, communication latency may be tested, for example, using a 'ping' method, (i.e., a computer network tool which tests whether a particular host is reachable across an internet protocol (IP) network). Jitter (the variation in latency) also may be tested. In some embodiments, digital voice communications also may be tested. For example speech quality, and voice call initiation may be tested.

In an example embodiment one or more test applications reside in the memory of a mobile telephone device that executes tests (voice or data) via, among other things, communications through a mobile telephone network. A particular test application controls the operation of a particular test (also referred to herein as a test set) that includes one or more tasks. A task, as used herein, is meant to refer to an instance of a data application such as an FTP download, UDP upload, Ping, etc. In addition, for a given test, there may be one or more test payloads (e.g., one or more files comprising test data to be transmitted) associated with each task and a given task may be executed multiple times for a given test. For example, there may be one or more test files associated with an FTP download task, which may execute two, three or more times as determined by the test (which determines the number of cycles for the task). For predefined tests, the same test file(s) may be communicated repeatedly, each time the corresponding task is executed. In this embodiment the test payloads comprise data designed to synthesize a particular usage scenario and are not arbitrary user files communicated during the user's normal consumer activities.

To perform testing, the user may select one or more tests from a test menu (a list of predefined tests and saved custom tests) displayed on the display of the mobile telephone. The tests may be stored on the mobile telephone or may be downloaded via the mobile telephone network from a server having that has stored test (test server 107). Each test includes a group of one or more tasks (e.g., that may communicate one or more corresponding test files) that may be executed one or more times. Alternately a user may configure a custom test. For example, a user may select a task, then select from among one or more test files for each selected task and determine how many times each selected task should be repeated. The user may repeat the process to select a group of tasks and corresponding test payloads to define the custom test. Information of the custom tests and their parameters (e.g., tasks, cycles, test files, etc.) may be stored in non-volatile memory of the mobile telephone, be listed on the test menu thereafter, and be repeatedly retrieved and used to test the mobile telephone.

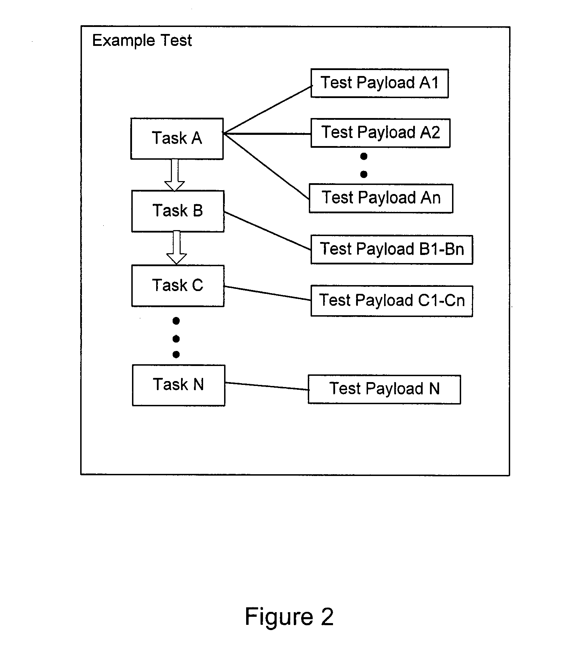

Referring to Figure 2, an example test may comprise multiple tasks (Tasks A through N). Each task may communicate (transmit and/or receive) one or more test files (e.g., Test Payload A1-An for Task A, which might include, for example, uploading three different data payloads for an download FTP task) via the mobile telephone network. During the test, each task may be performed in sequence to transmit and/or receive its associated test payload. Some tasks, however, may not have associated test payload. For example, if a task is designed to test latency (delay) there may not be a need to identify test payloads, because the same data packet(s) may be used to Ping the remote device each time the task is executed. In other embodiments, the size of the data packet(s) and other parameters may be selected for a Ping protocol test. Depending on the number of cycles of the task, one or more of the tasks may be repeated.

Whether a test is a predefined test or a customer test designed by a user, various parameters may define a given task. For example, for an FTP upload task, the parameters may include the file size, file type and target throughput (e.g., peak, average, etc.). The file size parameter indicates the size of the payload to communicate with the FTP upload task. The file type parameter indicates the type of file to use (e.g., text, bitmap, zip). Depending on the parameters, different files may be selected to be communicated with the task. However, for many tasks the type of data file may not be pertinent and not a selectable parameter. For a UDP upload, the file size, packet size, transfer rate, duration and a target throughput may be included as parameters. The transfer rate is the rate at which UDP packets are to be transmitted. A data packet size and packet interval fields may be automatically populated based on the selected rate. The duration parameter is the absolute duration of the UDP upload task (or other task). The target throughput is the desired average throughput in kilobits per second. For a Ping task, parameters may include the number of pings (e.g., the number of times to ping the server), the packet size (e.g., the amount of data (in bytes) with which to ping the server), and the target ping time (e.g., the desired average ping time in milliseconds).

In some embodiments, a test also may be included for polling the user with survey questions directed to the user's experience with the mobile telephone device. The test results (e.g., the results for each task of the test), along with the poll results (if any) may be stored in memory, and transmitted over the mobile telephone network to a central results database. Some tasks require the transmission of payload from the mobile telephone to a remote test server. Other tasks may require transmission of payload from the test center 110 to the mobile telephone 102. The results of a test may be determined by one or both of the test server 108 (or media server 106) or the mobile telephone device 102. For example, to determine throughput the receiving device (either the mobile telephone or the test sever 108) may measure the amount of data received periodically (e.g., bits per second) to determine the throughput. In other tasks, such as connectivity, the results may be determined one or both devices. For example, connectivity may be performed any task. If a FTP upload task cannot connect with the mobile telephone network to upload the data, that task may result in a failed connectivity, which would be determined by the mobile telephone device (i.e., determined by the transmitting device instead of the receiving device).

Exemplary results may include, but are not limited to bit transfer rate (e.g., peak and/or average throughput), connectivity (e.g., which may result in either success or failure), latency, jitter, error rate, connectivity loss, etc. In addition, the results may be encoded (and stored) with a time and date stamp, a GPS position of the mobile telephone, and with information for uniquely identifying the mobile telephone device tested (e.g., the telephone number of the mobile telephone device, International Mobile Equipment Identity (IMEI); model and serial numbers).

The same mobile telephone device may be tested at various locations within a given mobile telephone network. Similarly, different mobile telephone devices and different device configurations for a given mobile telephone may be tested to compare how well different devices and device configurations perform in the network. Further, testing may be performed for different mobile telephone devices in different mobile telephone networks to determine and compare how well the mobile telephone devices perform among the different networks.

One advantage of the present invention is that a user may select from among a plurality of protocols (e.g., FTP, HTTP, UDP, Ping) when selecting or configuring a test set. Numerous files and files types may be included as test payload and transferred during a task to evaluate the throughput and connectivity performance of the mobile telephone device for a given mobile telephone network. Another advantage is that the test results may be centrally stored in a results database. The results may be accessed for viewing immediately or at some later time by one or more authorized users.

### Test System Environment

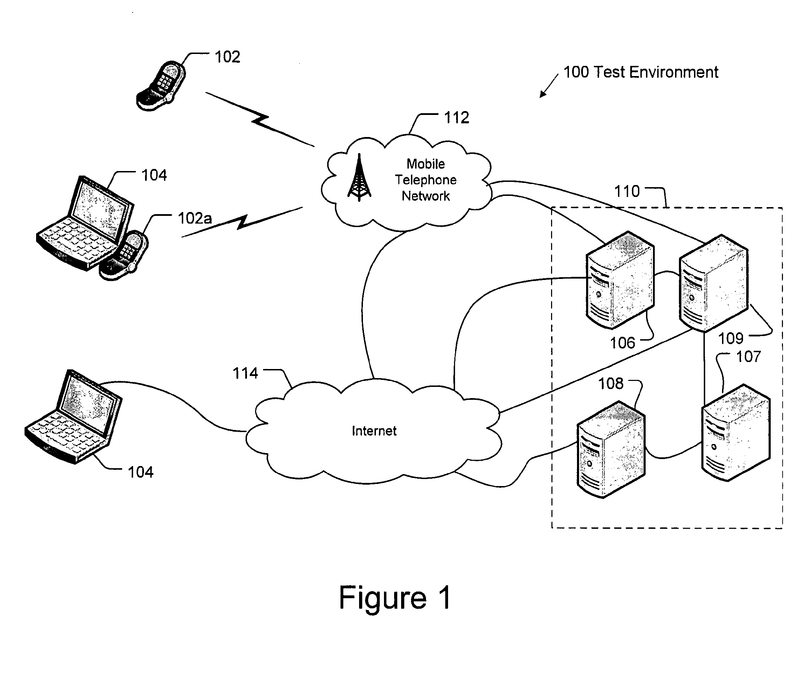

Figure 1 shows an example embodiment of a test system environment 100 for testing a mobile telephone device 102. The mobile telephone device 102 may be tested alone or may be connected to a portable computer 104 that executes the test application for testing the mobile telephone device (see 102a). Thus, the test system environment 100 may include the mobile telephone device 102 being tested, the portable computer 104 (if necessary), as well as one or more media servers 106, database servers 108, test servers 107, voice servers 109, and communication networks. In an example embodiment the media servers 106, voice servers 109, test servers 107, and database servers 108 may be co-located at a test center 110. The communication networks may include a mobile telephone network 112 and other networks (e.g., the internet 114). The media servers 106 may be configured to store and transmit a plurality of files that may include different types of files for performing various data tasks. The voice server 109 may be configured to test voice transactions. The test server 107 can be used to develop test scenarios that can be downloaded to mobile telephone devices, media servers 106, and database servers 108 to perform tests for a plurality of different telephone devices. The database servers 108 may store test parameters, test results, and other test payloads (e.g., test files). While Figure 1 depicts these as separate servers, in practice the functions of these servers may be performed by a single physical computer that uses different software (e.g., server software) to perform the associated functionality or multiple computers performing each function that are not co-located. In other words, the servers are depicted as separate components in Figure 1 for ease of explanation, but any suitable means of providing the functions described herein may be employed and fall within the scope of the present invention. As used herein, the term "computer" is meant to include a computer system that include one or more physically separate computing devices (e.g., servers, desk tops, lap tops, rack mounted, etc.) that may or may not be co-located with each other.

During testing, the mobile telephone device 102 may communicate with the servers through a communication path includes the mobile telephone network 112. The mobile telephone network 112 may be a radio network made up of a number of radio cells (or just cells) each served by a fixed transmitter, known as a cell site or base station. These cells are used to cover different areas in order to provide radio coverage over a wider area than the area of one cell. An exemplary mobile telephone network 112 may be based on any of various telecommunication standards, such as AMPS, DAMPS, CDMA2000, GSM, GPRS, EV-DO, UMTS, WiMAX, G1, G1.5, G2, and G3. The communication path also may include an internet protocol (IP) network, a broadband communication network, a VoIP network, and/or another wired or wireless network coupled to the internet 114 and capable of digital communications.

The test servers 107 may include one or more computers for implementing various test processes and developing tests that can be downloaded to a plurality of the mobile telephone devices upon completion of a new test or to each mobile telephone device upon selection of a test by the user (in which instance the mobile telephone device transmits a request for the test application to the server 107). In addition, updated menus of tests may be transmitted to all of the mobile telephone devices as new test applications become available and/or tests are updated. Prior to testing, a user may register for the test services with the test server 107 via the Internet 114. In an example embodiment, a message may be received at the test server 107 from the mobile telephone device 102. The test server may perform a test registration function and assign the test to another server such as the media server 106. The assigned media server 106 may perform the test functions that may be required at the test center 110 end of the communication path for the particular test or cooperate with the test server perform the functions. One or more media servers 106 may perform distinct or common functions. For example, one media server 106 may be an FTP server and perform throughput testing of FTP upload/download communications. Another media server 106 may be an HTTP server and perform throughput testing of HTTP communications. Still another media server 106 may be a multi-threaded UDP socket server for performing UDP upload/download tests. In various embodiments the differing functions (e.g., registration, FTP transfers, UDP communications, HTTP transfers) may be combined on one server or allocated among differing servers.

The database servers 108 may be coupled to the media servers 106, such as directly through a local network, or indirectly through the internet, a private IP network, or another network. The database servers 108 may function as a repository of task results. For example, upon completion of a task, the task results, a task identifier, a mobile telephone device identifier, a GPS location, and a time and date stamp may be stored in memory (in association with each other) of the database server 108. Test results may include, for example, an average and peak throughput for the performed tasks and an indication of whether the task was successful (e.g., met a desired threshold throughput, connectivity lost or not, etc.).

To access the test results a user may login to a database server 108 via the Internet 114. In an example embodiment, tests results from multiple tests may be grouped logically as projects. One or more users may be authorized to access the results. In addition to storing test results and allowing users to log in to access test results, the database server 108 also may perform post-processing operations to extract significant metrics, and to organize and report results. Results may be transmitted to the mobile telephone device 102 or associated portable computer 104 for viewing. In one embodiment, test results may be transmitted automatically upon completion of a test to the mobile telephone in substantially real time. In another embodiment, a user may view the results through a web interface.

Various statistics may be derived from the various test results. Reports may aggregate statistics, for example, by the specific test, by the specific mobile telephone device 102, for a group of mobile telephone devices, for all mobile telephone devices 102 associated with a given project, etc. Mobile telephone devices 102 may be grouped, for example, by make, model, form factor, antenna type, network, band, radio technology, operating system, and/or chip set to allow comparisons.

### Test Methods

As described above, the mobile telephone device 102 may include test applications stored in memory for performing tests to evaluate the mobile telephone device 102. Also included may be a user interface for initiating and controlling the test processes. Other embodiments may employ a co-located laptop to store data and test applications, and to control operation of the test. In this example embodiment, the test applications and test payloads reside in memory on the mobile telephone device 102.
In other embodiments, the test application and associated test payloads may be transmitted from the test server 107 just prior to test time via the Internet 114 or the mobile telephone network 112.

Prior to executing a task of a test set, the user may configure the test set by accessing the user interface. The user may select a predefined group of tasks (and test payloads) to be performed (e.g., a predefined test). Alternatively, the user may define a custom test set by selecting tasks (and test payloads) to be performed and storing the group of selected tasks as a test set. Alternatively, the user may download a test (or task set) from the test server 107. For each task to be performed there may be synthesized test files comprising test payload. For example for upload and download operations, there may be files of varying size and types stored in memory (of the mobile telephone device 102 or computer 104) and used for performing a corresponding task in a test set. When setting up a test, a GPS location of the telephone 102 also may be captured, transmitted to the test server 107, and associated in memory with the test results. As indicated above, the user may select a test set which includes a group of tasks to be performed. The user also may specify how many times a given task is to be repeated as part of the test.

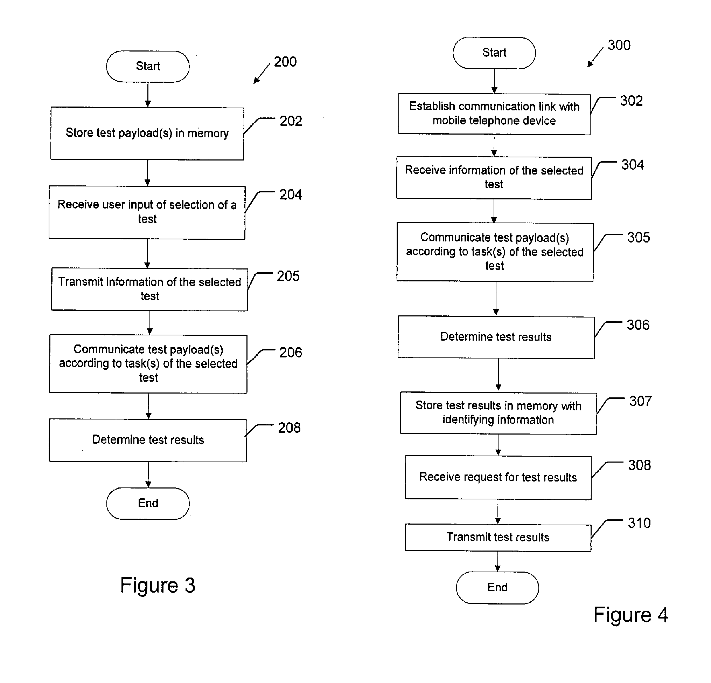

Figures 3 and 4 illustrate example processes 200 and 300 performed at each end of a communication channel for testing a digital communication between a mobile telephone device 102 and a test server 107 according to an example embodiment of the present invention. Processes 200 and 300 may be performed as part of a test. In particular, for the embodiments of Figures 3 and 4, test payload is communicated between (to and from) the mobile telephone device 102 to the media server 106. Prior to the test, the user selects a test by either selecting a predefined test (which may result in downloading of the selected test) or configuring/creating a customized test. In this example, the user has selected a predefined test, although the processes are substantially similar for scenarios in which the user creates a custom test set. At step 202, the test payload for the tasks of one or more test is stored in memory of the mobile telephone device 102 (or alternately the nearby computer 104). In some embodiments, the payloads may comprises data for testing a plurality of different protocols. This process may be performed days, weeks, or months before the test begins, or just minutes prior to beginning the test (and in response to the user selection of the test or request to start the test). Exemplary tasks for communicating from the mobile telephone device include an FTP upload task, an FTP download, an UDP upload task, and a PING task. For the FTP and UDP tasks, the test payloads may include one or more files stored in memory. The files may be communicated to the mobile telephone device 102 (or computer 104) for storage via the Internet or the mobile telephone network 112. At step 204, a user input is received that includes a selection of a test, which may correspond to an application to be executed to perform the selected test set. The received input may comprise a predefined test or creation of a customized test. At step 205, information of the selected test is transmitted to the test server 107. If the selected test is a predefined test, this process may simply include transmitting a test identifying number to the server, in which case the server retrieves the test application from memory. If the test is a user created test, this information may include data of the tasks, test payloads, parameters (e.g., task cycles, sequence of tasks, file sizes, packet sizes, thresholds, etc.) that are to be used by the server to perform the test. In some embodiments, upon starting of the test application, the test application on the mobile device 102 (or associated computer 104), downloads (e.g., via the internet or mobile telephone network) from the test server additional programming code and/or test payloads for performing the test, which may include, for example, software code (or information identifying) tasks, the test payloads, test parameters (e.g., task cycles, sequence of tasks, file sizes, packet sizes, etc.). Such an embodiment allows the tests on multiple devices 102 to be centrally managed by a project manager (via the test server). A test and/or task may be altered centrally, at which time a message (e.g., SMS, email, etc.) may be transmitted to each mobile telephone device 102 that includes a hyperlink to a location having the revised test(s) and/or task(s), which may then be downloaded to the mobile telephone device 102. In this example, step 202, therefore, may be performed after step 204.

At step 206, one or more test payloads are communicated between the mobile telephone device 102 and the media server 106 via the mobile telephone network 112 in accordance with each task of the selected test. Depending on the tasks of the selected test, the communications may comprise one or more communications (1) from the mobile telephone device 102 to the media server 106, (2) from the media server 106 to the mobile telephone device 102; or (3) communications to and from the mobile telephone device 102 (from and to the media server 106). For tests of voice communications, the data may be communicated with the voice server 109 instead of the media server 106.

As an example, the user may select one of a plurality of protocols to test in which case the selected protocol may be tested by repeating one or more tasks (e.g., two tasks comprising an upload FTP and a download FTP) multiple times communicating different test files (e.g., different sizes).

At step 208, the test results are determined. Each test may be configured to test and determine one or more communication qualities. As discussed, depending on the task, the mobile telephone device 102 or the media server 106 may determine the results of a given task. The results may include an indication (pass or fail) of whether a target throughput was achieved, along with data of the actual throughput (e.g., bit rate). In some embodiments the throughput is determined by the device receiving the upload. Further, the various tasks may be repeated according to the number of cycles designated by the user or predefined test parameters. Various tests and tasks may measure various communication qualities. For example, in other embodiments, the error rate is determined. In still other embodiments, the connectivity, error rate, latency, jitter, and throughput may be determined for a plurality of different protocols. The steps 204-208 may be repeated for additional tests for the same or a different mobile telephone device 102.

From the media server 106 perspective, steps 302 -310 of Figure 4 may be performed generally contemporaneously with the steps 202-208 of Figure 3. At step 302, the media server 106 establishes a communication link with the mobile telephone device 102 via the mobile telephone network (e.g., via a call from the mobile telephone device). At step 304, server receives information of the selected test. If the selected test is a predefined test, this process may simply include receiving a test identifying number, in which case the server retrieves the test application from memory. If the test is a user created test, this information may include data of the tasks, test payloads, parameters (e.g., task cycles, sequence of tasks, file sizes, packet sizes, etc.) that are used by the server to perform the test. At step 305, various test payloads are communicated between the mobile telephone device 102 and the media server 106 via the mobile telephone network 112 in accordance with each task of the selected test. Depending on the tasks of the selected test, the communications may comprise one or more communications (1) from the mobile telephone device 102 to the media server 106, (2) from the media server 106 to the mobile telephone device 102; or (3) communications to and from the mobile telephone device 102 (from and to the media server 106). Further, the various tasks may be repeated according to the number of cycles designated by the user or predefined test parameters. At step, 307 the test results are determined. As discussed, the form (pass/fail versus qualitative) and value of the results will depend on the selected test and its associated tasks.

At step 307 the test results are stored in memory at the database server 108. If the results of a test are determined by the mobile telephone device 102 (e.g., a download throughput), the test results may be transmitted to the data base server 108 (via the same communication link used to communicate data by the last task or via the internet). The results may include identifying information along with the results, such as test identification, device identification (e.g., the telephone number of the mobile telephone device), location information, and a date and time stamp.

Immediately or at any time thereafter, the database server 108 at step 308 may receive a request for the test results from the mobile telephone device 102 or from a computing device having access to the internet. In particular, an authorized user may access a secure web page (e.g., may login) and view the test results. At step 310 the database server 108 transmits the test results to the authorized user. In some embodiments, upon completion of a test or task the database server 108 (or media server) may automatically transmit the results to the mobile telephone device 102 or a co-located computer 104. The steps 302-310 may be repeated for additional tests for the same or a different mobile telephone device.

In some embodiments, the user also may configure a display to view the results in substantially real-time while the test is ongoing. In particular, the user may monitor the throughput for each task and receive an indication at the completion of a test of whether a task (and the test) passed or failed and immediately get qualitative test results (data of the throughput (average and peak), error rate, latency, etc.).

With respect to processes 200 and 300 of Figures 3 and 4, the sequence of the steps shown are for illustrative purposes only and other processes of the invention may include the same or similar steps in other sequences.

In one embodiment, the present invention comprises a computer program code product having a tangible computer readable medium containing computer program code for testing the mobile telephone device 102. Depending on the embodiment, the program code may be stored in the mobile telephone device or an associated computer 104 to thereby control the operation of the test. The program code may include a user application for receiving a user input indicating a selection of a test, a data structure comprising test payloads, and a test application configured to cause the mobile telephone device to communicate one or more test payloads via the mobile telephone network using at least one of a plurality of communication protocols based on information received via the user application.

The test server may used to test a plurality of mobile telephone devices and perform the processes, comprising communicating data, using a first communication protocol, with each of a first group of mobile telephone devices to test one or more communication qualities; communicating data, using a second communication protocol, with each of a second group of mobile telephone devices to test one or more communication qualities. The process may further include, for each mobile telephone device of the first group and the second group, determining a test result for the communicated data, and storing data of the test results in a memory.
Some of the plurality of mobile telephone devices may be in the first group and also in the second group. In addition, the process may further comprise communicating payloads, using the first communication protocol and the second communication protocol, with a multitude of mobile telephone devices to test one or more communication qualities.

It is to be understood that the foregoing illustrative embodiments have been provided merely for the purpose of explanation and are in no way to be construed as limiting of the invention. Words used herein are words of description and illustration, rather than words of limitation. In addition, the advantages and objectives described herein may not be realized by each and every embodiment practicing the present invention. Further, although the invention has been described herein with reference to particular structure, steps and/or embodiments, the invention is not intended to be limited to the particulars disclosed herein. Rather, the invention extends to all functionally equivalent structures, methods and uses, such as are within the scope of the appended claims. Those skilled in the art, having the benefit of the teachings of this specification, may affect numerous modifications thereto and changes may be made without departing from the scope and spirit of the invention.

[0045] An alternative embodiment of the invention described and supported by the present specification, but not claimed in the appendant claims, is defined in the following paragraphs:-

A method of testing one or more communication qualities of a plurality of mobile telephone device configured to communicate over a mobile telephone network, comprises:
communicating one or more test payloads with each of the plurality of mobile telephone devices to perform a plurality of communication tests;
   wherein at least some of the plurality of communication tests include communicating one or more test payloads using different communication protocols;
determining test results for each of the plurality of communication tests; and
storing the test results in a memory along with information identifying the mobile telephone device tested.

The method according to paragraph [0045], may further comprise transmitting the test results to a computer co-located with the mobile telephone device.

The method according to paragraph [0045], may further comprise transmitting a test payload to a multitude of the plurality of mobile telephone devices to be transmitted by the multitude of the plurality of mobile telephone devices in performing a communication test.

The method according to paragraph [0045], may further comprise transmitting test parameter data to a multitude of the plurality of mobile telephone devices for use by the multitude of mobile telephone devices in performing a communication test.

The method according to paragraph [0045], may further comprise:
storing data of a plurality of communication tests in memory; and
transmitting a notice that a first communication test is available to the plurality of mobile telephone devices.

The method according to paragraph [0049], may further comprise:
receiving a request for data of the first communication test; and
transmitting data of the first communication test in response to receiving said request.

The method according to paragraph [0049], may further comprise transmitting program code for performing one or more communication tests to a multitude of the plurality of mobile telephone devices.

A method of testing one or more communication qualities of a plurality of mobile telephone devices configured to communicate over a mobile telephone network, comprises:
communicating one or more test payloads, using a first communication protocol, with each of a first group of mobile telephone devices to test one or more communication qualities;
communicating one or more test payloads, using a second communication protocol, with each of a second group of mobile telephone devices to test one or more communication qualities;
for each mobile telephone device of the first group and the second group, determining a test result for the communicated test payloads; and
storing data of the test result in a memory.

The method according to paragraph [0052], may further comprise communicating one or more test payloads, using a third communication protocol, with each of a group of mobile telephone devices to test one or more communication qualities.

The method according to paragraph [0052], may further comprise communicating one or more test payloads, using the first communication protocol and the second communication protocol, with a multitude of the plurality of mobile telephone devices to test one or more communication qualities.

The method according to paragraph [0052], may further comprise for each of a multitude of the mobile telephone devices:
receiving information of a user selection of a test; and
in response to said receiving information of a user selection, transmitting to a remote device test information configured to be used to test the mobile telephone device.

The method according to paragraph [0055], wherein the test information may comprise program code.

The method according to paragraph [0055], wherein the remote device may comprise the mobile telephone device.

The method according to paragraph [0055], wherein the remote device may comprise a computer co-located with the mobile telephone device.

## Claims

1. A method of testing a mobile telephone device configured to communicate over a mobile telephone network, comprising:
receiving a user selection of one of a plurality of communication tests;
wherein at least some of the plurality of communication tests comprise tests of different communication protocols;
storing one or more test payloads for the selected test in a memory; communicating the one or more test payloads over the mobile telephone network according to the selected test to perform the selected test; and
determining the results of the test.

2. The method according to claim 1, further comprising:
receiving one or more test parameters for use in performing the selected test; storing the one or more test parameters in the memory; and
using the one or more test parameters to perform the selected test.

3. The method according to claim 2, further comprising:
transmitting information of the selected test to a remote computer; and
wherein the one or more test parameters are received in response to said transmitting.

4. The method according to claim 3, wherein the one or more test parameters are received via a communication path that includes the Internet.

5. A method of testing a mobile telephone device configured to communicate over a mobile telephone network, comprising:
receiving a user selection of one of a plurality of communication tests;
wherein each test comprises one or more tasks;
wherein each task is configured to communicate one or more test payloads via one of a plurality of different communication protocols;
wherein a first plurality of the tasks is configured to communicate using a communication protocol that is different from a second plurality of the tasks; communicating one or more test payloads over the mobile telephone network
with the mobile telephone device according to the one or more tasks of the selected test; and
determining the results of the test.

6. The method according to claim 1 or claim 5, wherein the results comprise a bit rate.

7. The method according to claim 1 or claim 5, further comprising:
transmitting the results of the test over the mobile telephone network to a computer; and
storing the results on the computer along with data identifying the mobile telephone device and the location of the handset during the test.

8. The method according to claim 1 or claim 5, further comprising:
receiving program code for performing a first communication test;
storing the program code in memory; and
executing the program code upon selection of the first communication test.

9. The method according to claim 8 when dependent on claim 5, further comprising:
receiving a notice that data of the first communication test is available; and
transmitting a request for data of the first communication test.

10. A computer program code product stored in a tangible computer readable medium for testing a mobile telephone device configured to communicate via a mobile telephone network, comprising:
a plurality of test applications, each configured to cause the mobile telephone device to communicate one or more test payloads via the mobile telephone network using at least one of a plurality of communication protocols;
a user application for receiving a user selection of a test corresponding to one of the plurality of test applications; and
wherein at least some of the plurality of test applications are configured to cause the mobile telephone device to communicate a test payload via the mobile telephone network using a communication protocol that is different than a communication protocol used by at least one other test application to communicate a test payload.

11. The product according to claim 10, further comprising a code segment configured to cause the mobile telephone device to store in memory test information received from a remote device.

12. The product according to claim 10, further comprising a code segment configured to cause the mobile telephone device to transmit test results over the mobile telephone network to a remote computer.

13. The product according to claim 10, further comprising a code segment configured to cause the mobile telephone device to:
receive a first test application via the mobile telephone network;
store the first test application in memory; and
execute the first test application upon a user selection of the first test application.

14. The product according to claim 13, further comprising a code segment configured to cause the mobile telephone device to:
receive a notice that data of the first test application is available; and
transmit a request for data of the first communication test.
